Europäisches Patentamt

**European Patent Office**

Office européen des brevets

(19)

(11) Veröffentlichungsnummer : **0 159 980**
**B1**

(12) **EUROPÄISCHE PATENTSCHRIFT**

(45) Veröffentlichungstag der Patentschrift :
**23.12.87**

(21) Anmeldenummer : **83903563.1**

(22) Anmeldetag : **31.10.83**

(86) Internationale Anmeldenummer :
**PCT/HU 83/00055**

(87) Internationale Veröffentlichungsnummer :
**WO/8501865 (09.05.85 Gazette 85/11)**

(51) Int. Cl.⁴ : **A 47 F 5/08**, A 47 B 96/07

(54) **FACHWERKKONSOLE VON VERÄNDERLICHER KRAGLÄNGE.**

(43) Veröffentlichungstag der Anmeldung :
**06.11.85 Patentblatt 85/45**

(45) Bekanntmachung des Hinweises auf die Patenterteilung : **23.12.87 Patentblatt 87/52**

(84) Benannte Vertragsstaaten :
**DE FR GB**

(56) Entgegenhaltungen :
**DE-B- 1 813 359**
**DE-B- 2 119 849**
**US-A- 3 774 873**
**US-A- 3 973 748**
**US-A- 3 981 340**

(73) Patentinhaber : **KÖZPONTI VALTO-ES HITELBANK RT INNOVACIOS ALAP**
**Szabadság tér 5-6**
**H-1054 Budapest (HU)**

(72) Erfinder : **RUBIK, Erno "**
**Bimbò ut 210**
**H-1026 Budapest (HU)**

(74) Vertreter : **Springstubbe, Wolf, Dipl.-Ing.**
**Parkstrasse 15**
**D-8035 Gauting 1 (DE)**

Jouve, 18, rue St-Denis, 75001 Paris, France

## Beschreibung

Die Erfindung betrifft eine Fachwerkkonsole von veränderlicher Kraglänge, welche eine Gelenkgitterstruktur aufweist, die in zwei ortsfesten Punkten an einer Wand oder an einem beliebigen anderen Tragelement angelenkt befestigt ist.

Konsolen, insbesondere Wandarmkonsolen verschiedener Gestalt und Bestimmung sind bereits in zahlreichen Ausführungen bekannt geworden. Die einfachsten Wandarme sind beispielsweise als balgenartig ausziehbare Konstruktionen, bestehend aus zwei einander in Gelenkpunkten kreuzenden Schenkeln oder Lappen ausgeführt, an deren freien Ende meist eine Lampe hängend angeordnet ist. Diese Wandarme sind meistens um einen an einer an der Wand befestigbaren Scheibe angeordneten Bügelbolzen auch in seitlicher Richtung schwenkbar. Somit können solche Wandarme auch in zu der Wand parallele Ebenen eingeschwenkt werden. Es ist eine Konsole von veränderlicher Kraglänge, die nach Art der sog. Nürnberger Schere ausgebildet ist, u. a. in der DE-A-2 119 849 ausführlich beschrieben. Diese ist im wesentlichen durch Verdoppelung einer zweischenkligen Schere in balgenartig ausziehbarer bzw. einschiebbarer Weise derart ausgeführt, daß die verdoppelte Schere im mittleren Bereich durch einen Träger unterstützt ist, wobei die beiden Enden jeweils an einen Querrahmen angeschlossen sind. Dadurch bildet die Doppelschere ein Gestell, welches beiderseits einschiebbar ist. Die Einschiebbarkeit ist durch die gelenkige Ausführung der Doppelschere gewährleistet.

Eine andere Wandarmausführung ist aus der DE-A-2 207 521 bekannt. Dieser Wandarm ist insbesondere für Halterung von Bekleidungsstücken (wie Hosen, Mäntel u. a. m.) in Warenhäusern bestimmt. Der Wandarm ist steif ausgebildet und ist in einem an der Wand durch Verschraubung befestigten Profilstück in zwei Punkten, jedoch auf seitlich verschwenkbare Weise abgestützt.

Ebenfalls zur Halterung und zur Schaustellung von Kleidungsstücken ist eine weitere, in der DE-C-1 813 359 ausführlich beschriebene Wandarmkonstruktion vorgesehen. An einer an der Wand fest verschraubten fünfeckförmigen Tragplatte ist ein hochkantgestellter Träger aus Holz oder Metall befestigt, an welchem Kleiderbügel reitend angebracht werden können.

Aus der DE-C-2 019 457 ist schließlich eine weitere Wandarmausführung bekannt, welche ebenfalls zur Halterung und Vorführung von insbesondere Bekleidungswaren in Warenhäusern bestimmt ist. Hierbei sind in einer um eine Säule oder einen Ständer rotierbaren Hülse eine Anzahl in radialer Richtung auskragende, gegebenenfalls teleskopartige Träger jeweils durch zwei in verschiedenen Höhenlagen angeordnete Bolzen oder Stifte befestigt.

Über die oben Beschriebenen hinaus sind Wandarme noch in zahlreichen anderen Ausführungen bekannt, die größtenteils jedoch starre, einseitig eingespannte Träger sind. Während diese Träger allgemein von konstanter, unveränderlicher Länge sind, haben die balgenartig ausziehbaren und einschiebbaren Scherenausführungen den Nachteil, daß am freien Ende im Lastangriffspunkt lediglich eine vertikal nach unten gerichtete kraft wirkt, wodurch das belastete Armende meist « durchhängt », die Konsole selbst eine bleibenden Gestaltänderung, Verformung erfährt.

Bei einer (beispielsweise aus US-A-3 981 340) bekannten Fachwerkkonsole von veränderlicher Kraglänge mit einer in zwei ortsfesten Punkten an einem Tragelement angelenkt befestigten Gelenkgitterstruktur, bei der, von den zwei im Abstand liegenden ortsfesten Gelenkpunkten ausgehend, in Kragrichtung fortlaufend zwei parallelogrammförmige Gelenkgitterfelder aneinandergereiht sind, die jeweils aus parallel verlaufenden Gelenkstäben sowie aus deren Enden zwischen Gelenkpunkten paarweise miteinander verbindenden Koppelvorrichtungen bestehen, hat man einem solchen « Durchhängen » mit Hilfe von Spiralfedern zu begegnen versucht, die jeweils zwischen einem Befestigungspunkt an einer Koppelvorrichtung oder einem oberen Gelenkstab und einem in Kragrichtung weiter entfernt liegenden Befestigungspunkt an dem zugehörigen unteren Gelenkstab eingehängt sind.

Solche Spiralfedern, mit denen übrigens bei einer Positionsänderung der Konsole merkliche Einschwingerscheinungen verbunden sein können, sind allerdings ästhetisch nicht sehr befriedigend, zumal sie auch für Schmutzablagerungen besonders empfänglich sind, weshalb man solche bekannten Fachwerkkonsolen auch mit einem Futteral überzogen hat, was die ganze Konsole entsprechend aufwendiger macht.

Die Erfindung stellt sich nun die Aufgabe, eine einfache, wenig aufwendige Fachwerkkonsole von veränderlicher Kraglänge zu schaffen, die frei von den erwähnten Nachteilen bekannter Wandarme und Fachwerkkonsolen ist, die in jeder Stellung, d. h. bei beliebig eingestellter Kraglänge, ihre Position auch unter Belastung beibehält und bei welcher eine günstige Kraftableitung zu den Verankerungspunkten bei gering gehaltenen Stabkräften gewährleistet ist.

Ausgehend von einer Fachwerkkonsole von veränderlicher Kraglänge, welche eine Gelenkgitterstruktur aufweist, die in zwei ortsfesten Punkten an einer Wand oder an einem beliebigen anderen Tragelement angelenkt befestigbar ist, wobei, von den zwei im Abstand liegenden, ortsfesten Gelenkpunkten ausgehend, in Kragrichtung fortlaufend mindestens zwei parallelogrammförmige Gelenkgitterfelder aneinandergereiht sind, jeweils bestehend aus parallel verlaufenden Gelenkstäben sowie aus die Enden der letzteren zwischen Gelenkpunkten paarweise miteinander verbindenden Koppelvorrichtungen, wird die gestellte Aufgabe erfindungsgemäß dadurch gelöst, daß jede Koppelvorrichtung aus einer Koppelstange besteht, deren Länge jeweils gleich dem Abstand der ortsfesten Gelenkpunkte ist, und daß mindestens einer der ortsfesten Gelenkpunkte mit dem diagonal gegenüberliegenden Gelenkpunkt der abschliessenden Koppelstange des in Kragrichtung letzten Gelenkgitterfeldes durch mindestens einen im wesentlichen dehnungsfreien Seilzug, der entlang gleichsinniger Diagonalen der Gelenkgitterfelder und zwischen diesen Diagonalabschnitten entlang der Koppelstange(n) verläuft, verbunden ist.

Die Erfindung bringt den Vorteil mit sich, daß die Kraglänge der Fachwerkkonsole auf einfache Weise auch ohne merkliche Einschwingerscheinungen verändert werden kann und daß die Fachwerkkonsole auch ohne Spiralfederhilfe ihre jeweilige Position auch unter Belastung beibehält.

Bei an ihrem freien Ende in der gleichen Wirkungslinie, jedoch in beiden Lastangriffsrichtungen zu belastenden Fachwerkkonsolen gemäß der Erfindung sind in deren weiterer Ausgestaltung zweckmäßigerweise beide ortsfeste Gelenkpunkte jeweils mit den diagonal gegenüberliegenden Gelenkpunkten der abschliessenden Koppelstange des in Kragrichtung letzten Gelenkgitterfeldes. durch zwei im wesentlichen dehnungsfreie Seilzüge, die jeweils entlang gleichsinniger Diagonalen der parallelogrammförmigen Gelenkgitterfelder und zwischen diesen Diagonalabschnitten entlang der Koppelstangen verlaufen, verbunden.

In der Praxis haben sich insbesondere Ausführungen der erfindungsgemäßen Fachwerkkonsole für äußerst vorteilhaft erwiesen, bei welchen die ortsfesten Gelenkpunkte mit den diagonal gegenüberliegenden Gelenkpunkten der abschließenden Koppelstange des in Kragrichtung letzten Gelenkgitterfeldes durch einen vorgespannte Seilzug bzw. Seilzüge vorzugsweise aus Kord, aus geflochtenem Stahlseil oder aus Kunststoff oder ähnlichen, verbunden sind, wobei (der Seilzug) die Seilzüge entlang der Koppelstangen um der Gelenkpunkte mit vorzugsweise gleichachsigen, freilaufend gelagerten Rollen, die letzteren abwechselnd in entgegengesetztem Sinne umschlingend geführt (ist) sind. Zwecks Sicherung einer in auf die Kragrichtung senkrechten Richtung minimal gehaltenen Bewegungsfreiheit der erfindungsgemäßen Fachwerkkonsole ist es von Vorteil, falls der Abstand der ortsfesten Gelenkpunkte stets kleiner als die Längen der Gelenkstäbe der Gelenkgitterfelder ist, und/oder die Längen der Gelenkstäbe der Gelenkgitterfelder jeweils gleich sind.

Die abschließende Koppelstange des in Kragrichtung letzten Gelenkgitterfeldes kann zweckmäßig zugleich als Lasteinleitglied ausgebildet sein und es hat sich für vorteilhaft erwiesen die ortsfesten Gelenkpunkte in einem vertikal verlaufenden Abstand entfernt untereinander anzuordnen. Eine Erweiterung des möglichen und vorteilhaften Anwendungs- bzw. Einsatzgebietes der erfindungsgemäßen Fachwerkkonsole ergeben Ausführungen derselben, welche in ortsfesten Gelenkpunkten derart angelenkt sind, daß die Gelenkstäbe des in Kragrichtung ersten Gelenkgitterfeldes in einer durch die ortsfesten Gelenkpunkte hindurchgehenden vertikalen Ebene und auch um eine die Gelenkpunkte verbindende vertikale Achslinie schwenkbar sind. Die ortsfesten Gelenkpunkte können zweckmäßigerweise auch an einer Trägerplatte, einer Tragscheibe oder an einem anderen Befestigungsglied, welches an einer Wand oder an einem beliebigen anderen Tragelement lösbar befestigt ist, angeordnet sein.

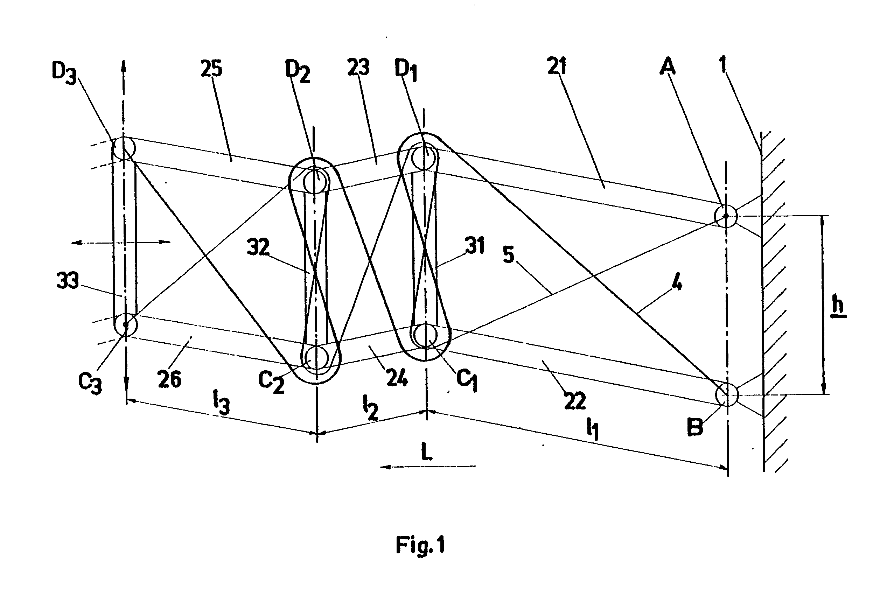

Die Erfindung wird nachstehend an einem Ausführungsbeispiel anhand der Zeichnung näher beschrieben. Die Zeichnungsfigur stellt als Beispiel die statisch-kinematische Prinzipskizze einer Fachwerkkonsole von veränderlicher Kraglänge gemäß der Erfindung bestehend aus drei aneinandergereihten Gelenkgitterfeldern dar, wobei die Längen der parallelen Gelenkstäbe der einzelnen parallelogrammförmigen Felder stets unterschiedlich sind.

Die erfindungsgemäße Fachwerkkonsole gemäß obenerwähnten Zeichnung ist zunächst in voneinander um einen Abstand h vertikal untereinander an einer Wand I auf hier nicht näher beschriebene Weise fest angeordneten Gelenkpunkten A und B einseitig angelenkt, d. h. freitragend befestigt. Sie besteht aus drei aneinandergereihten Gelenkgitterfeldern, welche von den ortsfesten Gelenkpunkten A und B in Kragrichtung L ausgehend jeweils durch Gelenkstäbe 21, 22 und eine Koppelstange 31, durch Gelenkstäbe 23, 24 und Koppelstange 32 sowie durch Gelenkstäbe 25, 26 und eine abschließende Koppelstange 33 gebildet sind. Die Abstände C1D1, C2D2 und C3D3 der Endgelenkpunkte der Koppelstangen 31, 32 und 33 sind stets dem Abstand h der ortsfesten Gelenkpunkte A, B gleich. Die Gelenkstäbe 21, 22, 23, 24 und 25, 26 sind paarweise gleich lang und haben in der genannten Reihenfolge Längen $l_1$, $l_2$ und $l_3$. Demzufolge stellt die Gelenkgitterstruktur der erfindungsgemäßen Fachwerkkonsole in jeder beliebiger Stellung einen Fachwerkträger mit drei parallelogrammförmigen Gitterfeldern dar. Der ortsfeste Gelenkpunkt B ist mit dem in Kragrichtung L diagonal gegenüberliegenden (oberen) Gelenkpunkt D3 der letzten, abschließenden Koppelstange 33 durch einen im wesentlichen dehnungsfreien Seilzug 4, bestehend beispielsweise aus vorgespanntem Stahlflechtseil derart verbunden, daß der Seilzug 4 stets entlang gleichsinnig verlaufender Diagonalen (BD1, C1D2 und C2D3) der Gelenkgitterfelder, und zwischen diesen Diagonalabschnitten stets entlang der Koppelstangen 31, 32, vorzugsweise um in den Gelenkpunkten D1, C1, D2 und C2 freilaufend gelagerte (in der Zeichnung nicht näher dargestellte) Seilrollen, die letzteren stets abwechselnd in entgegengesetztem Sinne umschlingend geführt ist. Auf analoge Weise ist ein zweiter Seilzug 5. der im wesentlichen gleichfalls dehnungsfrei ist. zwischen dem ortsfesten Gelenkpunkt A und dem diagonal gegenüberliegenden Gelenkpunkt C3 der abschließenden Koppelstange 33 des in Kragrichtung letzten Gelenkgitterfeldes entlang den Diagonalen AC1, D1C2 und D2C3 bzw. zwischen diesen Diagonalabschnitten um freilaufende Rollen in den Gelenkpunkten C1, D1, C2 und D2, die letzteren stets abwechselnd entgegengesetzt umschlingend geführt.

Da bei der in der Zeichnung dargestellten Ausführung der erfindungsgemäßen Fachwerkkonsole die ortsfesten Gelenkpunkte in vertikaler Richtung untereinander angeordnet sind, bleiben bei einer Kraglängenverstellung der Konsole, wie sie in der Figur durch einen Doppelpfeil versinnbildlicht ist, alle Koppelstangen 31, 32 und 33 stets vertikal, während sich die Winkellagen der Gelenkstäbe 21, 22, 23, 24 und 25, 26 paarweise ändern. Um nahezu vernachlässigbare Beträge ändern sich dabei auch die Höhenlagen der Koppelstangen 31, 32 und 33 in vertikaler Richtung. Die Höhenänderung ist umso geringer, je größer die Verhältnisse der Längen $l_1$, $l_2$ und $l_3$ der Gelenkstäbe zum Abstand h und je kleiner die Differenzen zwischen den Längen $l_1$, $l_2$ und $l_3$ sind.

Die in Kragrichtung L letzte abschließende Koppelstange 33 kann in vertikaler Richtung belastet werden, ohne daß sich dadurch die Kraglänge ändern würde. Die jeweils eingestellte Kraglänge der erfindungsgemäßen Fachwerkkonsole kann jedoch durch Kraftkomponenten, die in Richtung des figurgemäßen Doppelpfeiles, im vorliegenden Fall also horizontal wirken, ohne nennenswerten Widerstand geändert werden. Die Koppelstange 33 kann entweder welbst als Lasteinleitglied ausgebildet sein, oder es kann an ihr ein beliebiges Lasttragelement wie beispielsweise ein Haken, ein Bolzen usw. starr befestigt sein. Im Falle einer vertikal wirkenden Last wird je nach Belastungsrichtung in einem der Gelenkpunkt C3, D3 eine nach oben wirkende, während im anderen eine nach unten wirkende Reaktionskraft erzeugt. Im Schwerpunkt der Fachwerkkonsole kommt jedoch stets nur eine mit der Konsolenmasse proportionale Schwerkraft zur Geltung.

Die einfachsten Ausführungen der erfindungsgemäßen Fachwerkkonsole enthalten nur zwei parallelogrammförmige Gelenkgitterfelder. Je nach gewünschter Kraglänge können jedoch als Weiterenfwicklungen der in der Zeichnung lediglich beispielshalber dargestellten Ausführung, auch Fachwerkkonsolen bestehend aus mehr als drei Gelenkgitterfeldern im Sinne der Erfindung verwirklicht werden. Die Querschnitte der Gelenkstäbe und Koppelstangen hinsichtlich Gestalt und Größe können dem jeweiligen Anwendungszweck entsprechend frei ausgelegt werden. Das gleiche gilt für die Auswahl des jeweiligen Werkstoffes. Einflußfaktoren sind dabei auch aus ästhetischen Gründen zu erwägen. Auch die Gestaltung der Gelenke ist weitgehend dem Konstrukteur frei überlassen. Es kann dabei oft von Vorteil sein, falls auch in horizontaler Richtung relativ zur Wandebene verschwenkbare Fachwerkkonsolen von veränderlicher Länge, insbesondere als Wandarme ausgelegt werden. In der Innenarchitektur haben sich oft Ausführungen als zweckmäßig erwiesen, welche in ortfesten Gelenkpunkten A, B gelenkig verankert sind, welche an einer Wand I oder an einem beliebigen anderen Tragelement vorzugsweise lösbar befestigbaren, beispielsweise anschraubbaren oder aufhängbaren Trägerplatten, Tragscheiben usw. von dekorativer Wirkung angeordnet sind.

Im Rahmen des durch die nachstehenden Patentansprüche festgelegten Schutzumfanges können selbstverständlich auch die Seilzüge 4, 5 hinsichtlich ihrer Werkstoffe, Endbefestigung und der konstruktiven Ausbildung der Art ihrer Führung un die entsprechenden Gelenkpunkte, auf die hier nicht näher eingegangen wird, frei festgelegt, gestaltet und dimensioniert sein.

## Patentansprüche

1. Fachwerkkonsole von veränderlicher Kraglänge, welche eine Gelenkgitterstruktur aufweist, die in zwei ortsfesten Punkten (A, B) an einer Wand oder an einem beliebigen anderen Tragelement angelenkt befestigbar ist, wobei, von den zwei im Abstand (h) liegenden, ortsfesten Gelenkpunkten (A, B) ausgehend, in Kragrichtung (L) fortlaufend mindestens zwei parallelogrammförmige Gelenkgitterfelder aneinandergereiht sind, jeweils bestehend aus parallel verlaufenden Gelenkstäben (21, 22, 23, 24, 25 und 26) sowie aus die Enden der letzteren zwischen Gelenkpunkten (C1, D1 ; C2, D2 ; C3, D3) paarweise miteinander verbindenden Koppelvorrichtungen (31, 32, 33), dadurch gekennzeichnet, daß jede Koppelvorrichtung aus einer Koppelstange (31, 32, 33) besteht, deren Länge jeweils gleich dem Abstand (h) der ortsfesten Gelenkpunkte (A, B) ist, und daß mindestens einer (B) der ortsfesten Gelenkpunkte (A, B) mit dem diagonal gegenüberliegenden Gelenkpunkt (D3) der abschliessenden Koppelstange (33) des in Kragrichtung (L) letzten Gelenkgitterfeldes durch mindestens einen im wesentlichen dehnungsfreien Seilzug (4), der entlang gleichsinniger Diagonalen der Gelenkgitterfelder und zwischen diesen Diagonalabschnitten entlang der Koppelstange(n) (31, 32) verläuft, verbunden ist.

2. Fachwerkkonsole nach Anspruch 1, dadurch gekennzeichnet, daß beide ortsfesten Gelenkpunkte (A, B) jeweils mit den diagonal gegenüberliegenden Gelenkpunkten (C3, D3) der abschliessenden Koppelstange (33) des in Kragrichtung (L) letzten Gelenkgitterfeldes durch zwei im wesentlichen dehnungsfreie Seilzüge (5, 4), die jeweils entlang gleichsinniger Diagonalen der parallelogrammförmigen Gelenkgitterfelder und zwischen diesen Diagonalabschnitten entlang der Koppelstange(n) (31, 32) verlaufen, verbunden sind.

3. Fachwerkkonsole nach Anspruch 1 oder 2, dadurch gekennzeichnet, daß die ortsfesten Gelenkpunkte (A, B) mit den diagonal gegenüberliegenden Gelenkpunkten (C3, D3) der abschließenden Koppelstange (33) der in Kragrichtung (L) letzten Gelenkgitterfeldes durch (einen) vorgespannte(n) (Seilzug) Seilzüge (4, 5) vorzugsweise aus Kord, aus geflochtenem Stahlseil oder aus Kunststoff oder ähnlichen, verbunden sind.

4. Fachwerkkonsole nach einem der Ansprüche 1 bis 3, dadurch gekennzeichnet, daß der Seilzug bzw. die Seilzüge (4, 5) entlang der Koppelstangen (31, 32) um die Gelenkpunkte (C1, D1 ; C2, D2) mit vorzugsweise gleichachsigen, freilaufend gelagerten Rollen, die letzteren abwechselnd in entgegengesetztem Sinne umschlingend geführt ist bzw. sind.

5. Fachwerkkonsole nach einem der Ansprüche 1 bis 4, dadurch gekennzeichnet, daß der Abstand (h) der ortsfesten Gelenkpunkte (A, B) stets kleiner als die Längen ($l_1$, $l_2$, $l_3$) der Gelenkstäbe (21, 22, 23, 24, 25, 26) der Gelenkgitterfelder ist.

6. Fachwerkkonsole nach einem der Ansprüche 1 bis 5, dadurch gekennzeichnet, daß die Längen ($l_1$, $l_2$, $l_3$) der Gelenkstäbe (21, 22, 23, 24, 25, 26) der Gelenkgitterfelder jeweils gleich sind.

7. Fachwerkkonsole nach einem der Ansprüche 1 bis 6, dadurch gekennzeichnet, daß die abschließende Koppelstange (33) des in Kragrichtung letzten Gelenkgitterfeldes zugleich als Lasteinleitglied ausgebildet ist.

8. Fachwerkkonsole nach einem der Ansprüche 1 bis 7, dadurch gekennzeichnet, daß die ortsfesten Gelenkpunkte (A, B) in einem vertikal verlaufenden Abstand (h) entfernt untereinander angeordnet sind.

9. Fachwerkkonsole nach Anspruch 8, dadurch gekennzeichnet, daß sie in ortsfesten Gelenkpunkten (A, B) derart angelenkt ist, daß die Gelenkstäbe (21, 22) des in Kragrichtung (L) ersten Gelenkgitterfeldes in einer durch die ortsfesten, Gelenkpunkte (A, B) hindurchgehenden vertikalen Ebene und auch um eine die Gelenkpunkte (A, B) verbindende Achslinie schwenkbar sind.

10. Fachwerkkonsole nach einem der Ansprüche 1 bis 9, dadurch gekennzeichnet, daß die ortsfesten Gelenkpunkte (A, B) an einer Trägerplatte, einer Tragscheibe oder an einem anderen Befestigungsglied, welche(s) an einer Wand (1) oder an einem beliebigen anderen Tragelement lösbar befestigt ist, angeordnet sind.

## Claims

1. Latticework cantilever arm of variable cantilever length, having an articulated trellis structure that at two fixed points (A, B) can be attached in articulated manner to a wall or to any other support element, in which, starting from the two fixed points (A, B), which are located at distance (h) apart, and continuing in the cantilever direction (L), at least two parallelogram-shaped articulated trellis areas are arranged one after the other, the articulated trellis areas each consisting of parallel articulated bars (21, 22, 23, 24, 25 and 26) and of coupling devices (31, 32, 33) that join the ends of the bars together in pairs between articulation points (C1, D1 ; C2, D2 ; C3, D3), characterised in that each coupling device consists of a coupling bar (31, 32, 33) the length of which is equal to the distance (h) between the fixed articulation points (A, B) and at least one (B) of the fixed articulation points (A, B) is connected to the diagonally opposite articulation point (D3) of the end coupling bar (33) of the last articulated trellis area in the cantilever direction (L) by at least one substantially non-stretch pull rope (4) which runs along diagonals of the articulated trellis areas, which diagonals have the same direction, and between these diagonal portions the rope runs along the coupling bar(s) (31, 32).

2. Latticework cantilever arm according to claim 1, characterised in that the two fixed articulation points (A, B) are each connected to the diagonally opposite articulation points (C3, D3) of the end coupling bar (33) of the last articulated trellis area in the cantilever direction (L) by two substantially non-stretch pull ropes (5, 4) which each run along diagonals of the parallelogram-shaped articulated trellis areas, which diagonals have the same direction, and between these diagonal portions the ropes run along the coupling bar(s) (31, 32).

3. Latticework cantilever arm according to claim 1 or 2, characterised in that the fixed articulation points (A, B) are connected to the diagonally opposite articulation points (C3, D3) of the end coupling bar (33) of the last articulated trellis area in the cantilever direction (L) by (a) pretensioned pull rope(s) (4, 5), preferably of cord, plaited steel rope or of plastics or the like.

4. Latticework cantilever arm according to any one of claims 1 to 3, characterised in that the pull rope or pull ropes (4, 5) is or are guided along the coupling bars (31, 32) around the articulation points (C1, D1 ; C2, D2) with free-running pulleys, preferably having the same axis, in such a manner that the rope(s) is or are wound around the pulleys alternately in opposite directions.

5. Latticework cantilever arm according to any one of claims 1 to 4, characterised in that the distance (h) between the fixed articulation points (A, B) is always smaller than the lengths ($l_2$, $l_3$) of the articulation bars (21, 22, 23, 24, 25, 26) of the articulated trellis areas.

6. Latticework cantilever arm according to any one of claims 1 to 5, characterised in that the lengths ($l_1$, $l_2$, $l_3$) of the articulated bars (21, 22, 23, 24, 25, 26) of the articulated trellis areas are each the same.

7. Latticework cantilever arm according to any one of claims 1 to 6, characterised in that the end coupling bar (33) of the last articulated trellis area in the cantilever direction is at the same time constructed as a load introduction member.

8. Latticework cantilever arm according to any one of claims 1 to 7, characterised in that the fixed articulation points (A, B) are arranged at a distance (h) apart one below the other in the vertical direction.

9. Latticework cantilever arm according to claim 8, characterised in that it is articulated in fixed articulation points (A, B) in such a manner that the articulation bars (21, 22) of the first articulated trellis area in the cantilever direction (L) can be swivelled in a vertical plane passing through the fixed articulation points (A, B) and also about an axial line connecting the articulation points (A, B).

10. Latticework cantilever arm according to any one of claims 1 to 9, characterised in that the fixed articulation points (A, B) are arranged on a carrier plate, a carrier disc or on another attachment member which is removably attached to a wall (1) or to any other support element.

## Revendications

1. Console en treillis à longueur d'encorbellement variable, présentant une structure en réseau d'articulation qui peut être fixée et articulée en deux points fixes (A, B) à une paroi ou à tout autre organe porteur, dans laquelle à partir des deux points d'articulations fixes, situés à la distance (h), sont accolés au moins deux champs de réseau d'articulation en forme de parallélogramme déployés dans le sens de l'encorbellement (L), constitués chacun par des barres articulées parallèles (21, 22 ; 23, 24 et 25, 26) ainsi que par des dispositifs d'accouplement (31, 32, 33) reliant les extrémités de ces dernières entre elles, deux à deux, entre des points d'articulation (C1, D1, C2, D2, C3, D3), caractérisée en ce que chaque dispositif d'accouplement comprend une entretoise (31, 32, 33) dont la longueur est chaque fois égale à la distance (h) des points d'articulation fixes (A, B) et qu'au moins un (B) des points d'articulation fixes (A, B) est relié au point d'articulation (D3) diagonalement opposé de l'entretoise terminale (33) du dernier champ de réseau d'articulation dans le sens de l'encorbellement (L) par au moins un câble (4) sensiblement inextensible, tendu le long des diagonales de même sens des champs de réseau d'articulation et entre ces sections de diagonale le long de l'(des) entretoise(s) (31, 32).

2. Console en treillis selon la revendication 1, caractérisée en ce que chacun des deux points d'articulation fixes (A, B) est relié aux points d'articulation diagonalement opposé (C, D) de l'entretoise terminale (33) du dernier treillis dans le sens de l'encorbellement (L) par deux câbles sensiblement inextensibles (5, 4), tendus chacun le long des diagonales de même sens des treillis en forme de parallélogramme et entre ces sections de diagonale le long de l'(des) entretoise(s) (31, 32).

3. Console en treillis selon la revendication 1 ou 2, caractérisée en ce que les points d'articulation fixes (A, B) sont reliés aux points d'articulation (C3, D3) diagonalement opposés de l'entretoise terminale (33) du dernier champ de réseau d'articulation dans le sens de l'encorbellement (L) par un (des) câble(s) précontraint(s) (4, 5), de préférence en textile, acier tressé, en matière synthétique ou analogue.

4. Console en treillis selon l'une des revendications 1 à 3, caractérisée en ce que le câble ou respectivement les câbles (4, 5) sont guidés le long des entretoises (31, 32) autour des points d'articulation (C1, D1 ; C2, D2) par des rouleaux fous, de préférence coaxiaux, entourant ces derniers alternativement dans des sens différents.

5. Console en treillis selon l'une des revendications 1 à 4, caractérisée en ce que la distance (h) des points d'articulation fixes (A, B) est constamment inférieure aux longueurs ($l_1$, $l_2$, $l_3$) des barres articulées (21, 22, 23, 24, 25, 26) des treillis.

6. Console en treillis selon l'une des revendications 1 à 5, caractérisée en ce que les longueurs ($l_1$, $l_2$, $l_3$) des barres articulées (21, 22, 23, 24, 25, 26) des treillis sont égales deux à deux.

7. Console en treillis selon l'une des revendications 1 à 6, caractérisée en ce que l'entretoise terminale (33) du dernier champ de réseau d'articulation dans le sens de l'encorbellement est agencé en organe générateur de charge.

8. Console en treillis selon l'une des revendications 1 à 7, caractérisée en ce que les points d'articulation fixes (A, B) sont disposés verticalement à une distance (h).

9. Console en treillis selon la revendication 8, caractérisée en ce qu'elle est articulée aux points d'articulation fixes (A, B), de manière à ce que les barres articulées (21, 22) du premier champ de réseau d'articulation dans le sens de l'encorbellement (L), puissent pivoter dans un plan vertical passant par les points d'articulation fixes (A, B) et aussi autour d'un axe joignant les points d'articulation (A, B).

10. Console en treillis selon l'une des revendications 1 à 9, caractérisée en ce que les points d'articulation fixes (A, B) sont disposés sur une plaque support, un disque-support ou sur un autre organe de fixation, fixé(s) de manière amovible à une paroi (1) ou à tout autre élément porteur.

Fig.1